# EUROPÄISCHE PATENTSCHRIFT

(11) **EP 1 652 615 B1**
(45) Veröffentlichungstag und Bekanntmachung des Hinweises auf die Patenterteilung: **25.02.2009**
(21) Anmeldenummer: 05023407.9
(22) Anmeldetag: 26.10.2005
(51) Int. Cl.: B23K 37/04, B23Q 1/03, B25B 5/00, B23K 26/20

(54) **Spannvorrichtung für Remote-Laserschweissanlagen mit einzeln mit einem Hydraulikfluid beaufschlagten Stempeln**
Clamping device for remote laser welding devices with stamps each being activated with a hydraulic fluid under pressure
Dispositif de fixation pour une installation de soudage laser avec des supports activés chacun par un fluide hydraulique sous pression

(30) Priorität: 29.10.2004 DE 102004052951
(43) Veröffentlichungstag der Anmeldung: 03.05.2006
(73) Patentinhaber: Bergmann, Uwe, 32139 Spenge (DE); Bergmann, Klaus, 32139 Spenge (DE)
(72) Erfinder: Bergmann, Uwe, 32139 Spenge (DE); Bergmann, Klaus, 32139 Spenge (DE)
(74) Vertreter: Wiebusch, Manfred

(56) Entgegenhaltungen:
- EP-A- 0 773 085
- WO-A-20/05061172
- DE-A1- 4 242 102
- DE-A1- 19 924 469
- US-A- 5 551 677
- US-B1- 6 202 999
- PATENT ABSTRACTS OF JAPAN Bd. 2003, Nr. 12, 5. Dezember 2003 (2003-12-05) -& JP 2004 154842 A (MITSUBISHI HEAVY IND LTD), 3. Juni 2004 (2004-06-03)

## Beschreibung

Die Erfindung betrifft eine Spannvorrichtung für Remote-Laserschweißanlagen gemäß dem Oberbegriff des Anspruchs 1 (siehe, z.B., EP-A-0 773 085).

Ein Beispiel einer Remote-Laserschweißanlage ist in EP 1 228 835 A1 beschrieben.

EP-A-0 773 085 beschreibt eine Spannvorrichtung für eine Laserschweißanlage, bei der zwei Bleche mit einem direkt über die Schweißnaht fahrenden Laser-Schweißkopf stumpf verschweißt werden. Die Spannvorrichtung weist hydraulisch betätigte Spannbacken auf, die die Ränder der Bleche an der Schweißnaht einspannen und eine etwaige Welligkeit aus der Kante der Bleche herausdrücken sollen.

DE 42 42 102 A1 beschreibt eine in eine Rollenbahn integrierte Spannvorrichtung für plattenförmige Werkstücke, die auf der Rollenbahn zugeführt und dann auf Stoß miteinander verschweißt werden. Die Spannvorrichtung weist ein vakuumbeaufschlagtes Spannbett mit mehreren Spannfeldern auf, die unabhängig voneinander hydraulisch in die Ebene der Rollenbahrn anhebbar sind.

Allgemein sind hydraulische Spannvorrichtungen für Werkstücke auch aus US-B1-6 202 999 und US-A-5 551677 bekannt.

Während bei den meisten herkömmlichen Laserschweißanlagen die Laser-Energie mit Hilfe eines Lichtleiters zu einem Schweißkopf zugeführt wird, der sich in unmittelbarer Nähe der Werkstücke befindet und mit Hilfe eines Roboterarms an den Werkstücken entlanggeführt wird, während die Werkstücke mit zangenartigen Spannmechanismen an der jeweiligen Schweißstelle fest zusammengehalten werden, ist bei einer Remote-Laserschweißanlage die Laserstrahlquelle in beträchtlichem Abstand zu den Werkstücken angeordnet, und der Laserstrahl wird mit Hilfe eines Ablenksystems, beispielsweise mit Hilfe eines um eine oder mehrere Achsen schwenkbaren Spiegels, auf die Werkstücke gerichtet. Eine solche Remote-Laserschweißanlage ist besonders zweckmäßig für Vielpunktschweißungen an flächig ausgedehnten Werkstücken, beispielsweise an zwei miteinander zu verschweißenden Blechen, und hat den Vorteil, daß die Schweißpunkte oder Schweißnähte in rascher Folge hergestellt werden können, ohne daß zwischendurch die Einspannung der Werkstücke verändert werden muß und ohne daß ein Roboterarm bewegt werden maß. Die Spannvorrichtung muß dann einerseits in der Lage sein, die zu verschweißenden Werkstücke in unmittelbarer Nähe jedes Schweißpunktes bzw. jeder Schweißnaht fest zusammenzuhalten, und muß andererseits den Zugang des Laserstrahls zu den Werkstücken ermöglichen.

Bei einer bekannten Spannvorrichtung der oben genannten Art ist das Widerlager mit Druckstiften bestückt, die jeweils gegenüberliegend zu dem Stempel angeordnet sind, und die Werkstücke sind zwischen den Stempeln und Druckstiften eingespannt, die verteilt in unmittelbarer Nähe der Schweißpunkte oder Schweißnähte angeordnet sind. Damit eine Schweißnaht von hoher Qualität erreicht wird, müssen die Werkstücke durch jedes Paar von Stempel und Druckstift mit einer ausreichenden Spannkraft zusammengehalten werden. Die Stempel sind teleskopartig ausfahrbar und jeweils durch eine Feder in Ausfahrrichtung vorgespannt, so daß die Maßtoleranzen der Werkstücke ausgeglichen werden können, sowie auch Toleranzen, die sich durch unterschiedliche Abnutzung der Stempel und Druckstifte ergeben können. Mit einer Verriegelungseinrichtung werden das Spannbett und das Widerlager gegenseitig verriegelt. Beim Schließen der Verriegelungseinrichtung federn die Stempel etwas ein, und die Spannkraft ist dann vom Federweg und von der Federkonstanten der einzelnen Federn abhängig. Lange Federwege erschweren die Konstruktion der Verriegelungseinrichtung sowie die genaue Positionierung der Werkstücke und führen zu erhöhtem Verschleiß. Bei kurzen Federwegen und entsprechend stärkerer Vorspannung der Federn wirken sich jedoch die Maßtoleranzen stärker auf die Spannkraft der einzelnen Stempel aus, so daß die Werkstücke nicht überall mit der gleichen Kraft zusammengehalten werden.

Aufgabe der Erfindung ist es, eine Spannvorrichtung zu schaffen, die ein einfaches, schnelles und sicheres Einspannen der Werkstücke sowie eine gleichmäßige Spannkraft in allen Werkstückbereichen ermöglicht.

Eine Spannvorrichtung gemäß der Erfindung ist in Anspruch 1 definiert.

Erfindungsgemäß werden somit die teleskopartigen Stempel hydraulisch abgefedert und gegen das Werkstück gespannt. Die Spannkraft ist für jeden Stempel vollständig durch den Fluiddruck und die Wirkfläche eines Kolbens bestimmt, der den Stempel abstützt oder fest mit dem Stempel verbunden ist, und sie ist unabhängig vom Hubweg der Stempel. Auf diese Weise läßt sich eine gleichmäßige Spannkraft an allen Einspannstellen erreichen.

Darüber hinaus besteht die vorteilhafte Möglichkeit, die Spannkraft durch geeignete Einstellung des Druckes auf einfache Weise je nach Bedarf zu variieren, während dies bei den herkömmlichen federbelasteten Stempeln einen beträchtlichen Umrüstaufwand erfordert hätte.

Vorteilhafte Ausgestaltungen der Erfindung sind in den Unteransprüchen angegeben.

Gemäß der Erfindung weist die Spannvorrichtung eine Verriegelungseinrichtung zur gegenseitigen Verriegelung des Spannbettes und des Widerlagers auf. Ein besonderer Vorteil ergibt sich hier daraus, daß die Hubwege der Stempel sehr klein gehalten werden können, so daß die Konstruktion des Verriegelungsmechanismus vereinfacht wird. Außerdem ist es problemlos möglich, die Stempel während des Schließens der Verriegelungseinrichtung drucklos zu schalten oder den Druck zu vermindern, so daß beim Schließen der Verriegelungseinrichtung wesentlich geringere Kräfte überwunden werden müssen und folglich auch ein geringerer Verschleiß auftritt.

Gemäß einer zweckmäßigen Weiterbildung der Erfindung sind die Fluiddrücke für die einzelnen Stempel oder für mehr oder weniger große Gruppen von Stempeln unabhängig einstellbar. Hierdurch ist es möglich, an besonders kritischen Stellen der Werkstücke gezielt eine höhere Spannkraft zu erzeugen.

Im folgenden wird ein Ausführungsbeispiel der Erfindung anhand der Zeichnung näher erläutert.

Es zeigen:
- Figur 1: einen schematischen Teilschnitt durch eine erfindungsgemäße Spannvorrichtung;
- Figur 2: eine Ansicht der Spannvorrichtung zur Illustration eines Beispiels einer Verriegelungseinrichtung; und
- Figuren 3 und 4: Schnitte durch Kolben/Zylindereinheiten zur Betätigung von Stempeln der Spannvorrichtung in unterschiedlichen Stellungen.

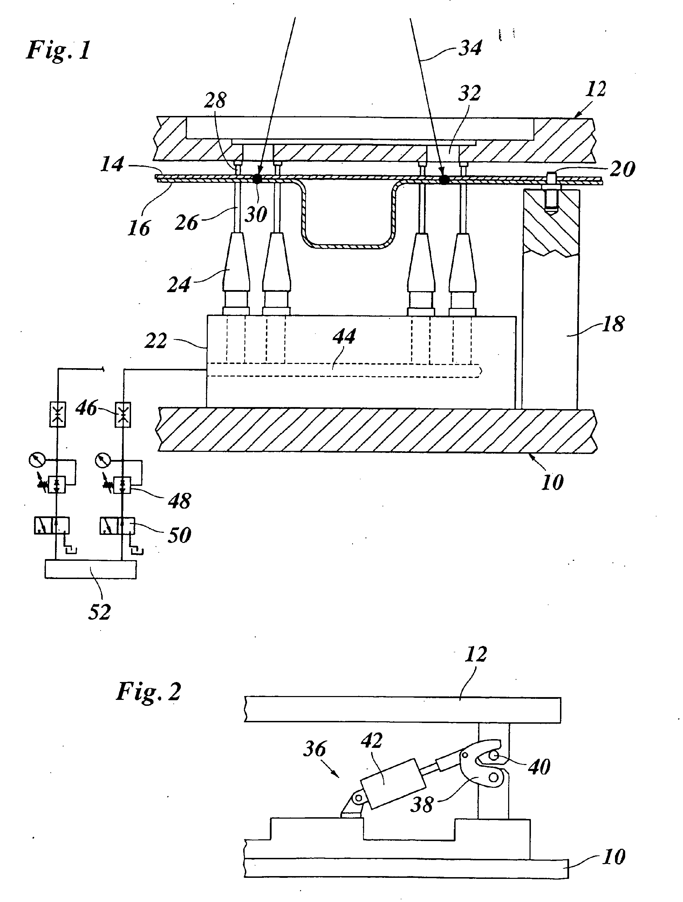

Die in Figur 1 gezeigte Spannvorrichtung weist ein Unterwerkzeug in der Form eines Spannbettes 10 und ein Oberwerkzeug in der Form eines Widerlagers 12 auf, zwischen denen zwei Werkstücke 14, 16, im gezeigten Beispiel zwei miteinander zu verschweißende Bleche, eingespannt sind.

Das Spannbett 12 weist, vorzugsweise in Randnähe, mehrere Stützen 18 auf, die Zentrierstifte 20 tragen. Die Zentrierstifte greifen paßgenau durch Bohrungen der Werkstücke 14, 16, so daß diese präzise relativ zueinander ausgerichtet werden.

Auf dem Spannbett 10 sind ein oder mehrere Verteilerblöcke 22 befestigt, die jeweils mehrere hydraulische Kolben/Zylindereinheiten 24 mit teleskopartig ausfahrbaren Stempeln 26 tragen. Das untere Werkstück 16 liegt auf den oberen Enden der Stempel 26 auf.

Das Widerlager 12 hat die Form eines stabilen Rahmens und ist an der Unterseite mit starren Druckstiften 28 bestückt, die jeweils einem der Stempel 26 gegenüberliegen. Die Stempel 26 und Druckstifte 28 sind verteilt entlang Schweißnähten 30 angeordnet, längs derer die beiden Werkstücke 14, 16 miteinander verschweißt werden. Damit die Werkstücke im Bereich der Schweißnähte fest zusammengehalten werden, sind die Stempel und Druckstifte vorzugsweise in unmittelbarer Nähe der Schweißnähte angeordnet.

In dem Widerlager 12 sind Durchbrüche 32 für einen oder mehrere Schweißlaserstrahlen 34 ausgespart. Diese Durchbrüche verlaufen längs der Schweißnähte 30. Wenn, wie im gezeigten Beispiel, die Schweißnähte 30 eine im wesentlichen geschlossene Kontur bilden sollen, sind die Schweißnähte an einzelnen Stellen unterbrochen, und an diesen Stellen sind auch die Durchbrüche 32 unterbrochen, so daß der mit Druckstiften bestückte, von der Schweißnahtkontur umschlossene innere Bereich des Widerlagers 12 stabil mit dem äußeren Bereich verbunden ist.

Der Laserstrahl 34 wird von einer nicht gezeigten Laserstrahlquelle erzeugt, die in beträchtlichem Abstand, beispielsweise 800-1600 mm, zu der Spannvorrichtung angeordnet ist, und wird mit Hilfe eines beweglichen Ablenkspiegels auf die Schweißnähte 30 gerichtet. Mit Hilfe einer nicht gezeigten Optik wird dabei die Brennweite des Laserstrahls an die je nach Schweißposition variierende Länge des Strahlengangs angepaßt.

Das Spannbett 10 und das Widerlager 12 sind gemäß der Erfindung während des Schweißvorgangs durch eine schematisch in Figur 2 gezeigte Verriegelungseinrichtung 36 miteinander verriegelt. Diese Verriegelungseinrichtung wird gebildet durch schwenkbar am Spannbett 10 gelagerte Klauen 38, die jeweils über einen starr am Widerlager 12 befestigten Stift 40 greifen und so das Spannbett und das Widerlager zusammenziehen. Die Klauen 38 sind beispielsweise mit Hilfe von Pneumatikzylindern 42 zwischen der Verriegelungsstellung und einer Freigabestellung verschwenkbar. Figur 2 zeigt nur einen von mehreren Sätzen solcher Klauen und Pneumatikzylinder, die so angeordnet sind, daß das Widerlager 12 gleichmäßig gegen das Spannbett 10 gezogen wird.

Im Verteilerblock 22 (Figur 1) ist ein System von Fluidkanälen 44 ausgebildet, durch die die Kolben/Zylindereinheiten 24 mit mit Hydraulikflüssigkeit versorgt werden. Die Fluidkanäle 44 bilden eine Hauptleitung, von der mehrere Leitungen zu den einzelnen Kolben/Zylindereinheiten 24 abzweigen. Die Hauptleitung ist über eine Schnellkupplung 46, ein Druckregelventil 48 und ein Hydraulikventil 50 mit einer hydraulischen Druckquelle 52 verbunden. Im gezeigten Beispiel sind mehrere Sätze von Hydraulikventilen 50 und Druckregelventilen 48 vorgesehen, so daß der Druck für unterschiedliche Gruppen von Kolben/Zylindereinheiten 24 auf dem Spannbett 10 unterschiedlich eingestellt werden kann. Weiterhin können die verschiedenen Gruppen im gezeigten Beispiel mit Hilfe der Hydraulikventile 50 auch zeitversetzt ein- und ausgeschaltet werden. Wahlweise ist jedoch auch eine Anordnung möglich, bei dem lediglich die Drücke individuell einstellbar sind, das Ein- und Ausschalten jedoch einheitlich mit einem einzigen Hydraulikventil erfolgt.

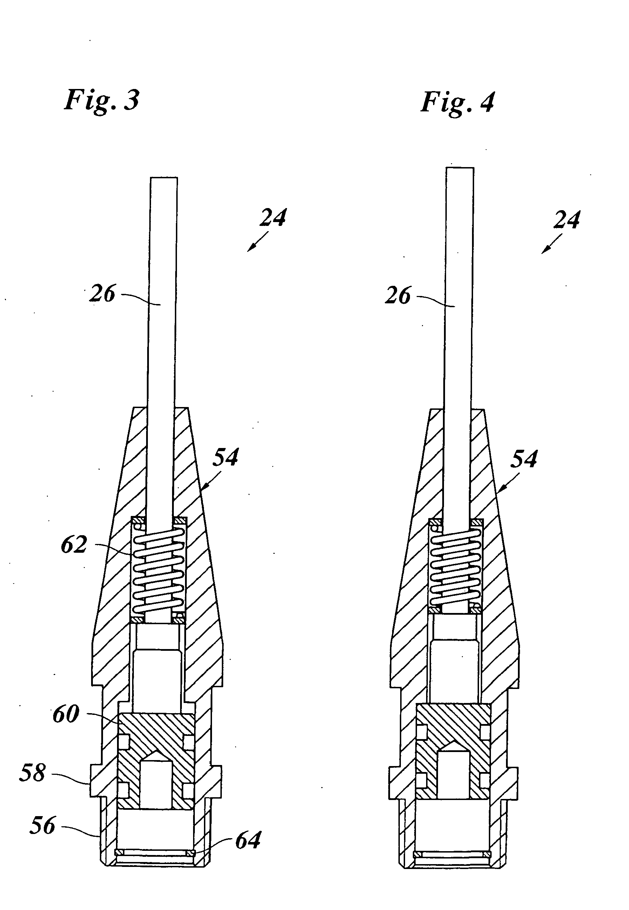

In Figuren 3 und 4 ist der Aufbau einer einzelnen Kolben/Zylindereinheit 24 detaillierter dargestellt. Der Stempel 26 ist axial verschiebbar in einem Stempelgehäuse 54 geführt, das sich nach oben konisch verjüngt und am unteren Ende einen Gewindestutzen 56 aufweist, mit dem es in den Verteilerblock 22 eingeschraubt werden kann, bis ein Bund 58 an der Oberfläche des Verteilerblockes anschlägt. Der Stempel 26 stützt sich mit seinem unteren Ende an einem Kolben 60 ab, der verschiebbar und fluiddicht in einem als Zylinder ausgebildeten unteren Teil des Stempelgehäuses 24 geführt ist und von unten über die zugehörige Fluidleitung 44 mit dem hydraulischen Druck beaufschlagt wird. Wahlweise kann der Stempel 26 auch in einem Stück mit dem Kolben 60 ausgebildet sein. Eine Druckfeder 62 umgibt den oberen Teil des Stempels 26 und spannt diesen sowie den Kolben 60 nach unten vor. Ein Sicherungsring 64 begrenzt den Hubweg des Kolbens 60 nach unten. Wenn die Druckzufuhr eingeschaltet ist, wird der Stempel 26 mit einer von der Einstellung des Druckregelventils 48 abhängigen Kraft gegen das Werkstück 16 gedrückt.

Figur 4 zeigt den Stempel 26 in der maximal ausgefahrenen Position. Diese Position sowie die maximal zurückgezogene Position des Stempels, die durch den Sicherungsring 64 definiert wird, sind in Bezug auf das Spannbett 10 präzise festgelegt, wenn sich das Stempelgehäuse 54 mit seinem Bund 58 auf dem Verteilerblock 22 abstützt. Durch geeignete Wahl der Länge des Stempels 26 läßt sich somit die Abstützposition für das Werkstück 16 präzise festlegen. Während der Sicherungsring 64 den maximalen Hubweg des Stempels begrenzt, läßt sich für den Betrieb der Spannvorrichtung wahlweise auch ein kleinerer Hubweg einstellen, indem die Kolben/Zylindereinheiten 24 nicht mit Hilfe der Hydraulikventile 50 vollständig drucklos geschaltet werden, sondern lediglich mit Hilfe der Druckregelventile 48 der Druck gemindert wird, so daß sich in der zurückgezogenen Position des Stempels ein von der Kraft der Druckfeder 62 abhängiger Gleichgewichtszustand einstellt.

Die vom Stempel 26 ausgeübte Spannkraft ist von dem hydraulischen Druck sowie von der Querschnittsfläche des Kolbens 60 abhängig. Diese Parameter sind so bestimmt, daß einerseits eine ausreichende Spannkraft erreicht wird, andererseits jedoch der Gesamtdurchmesser der Kolben/Zylindereinheit 24 so klein bleibt, daß sich die Stempel 26 genügend dicht an den Schweißnähten 30 anordnen lassen.

In dem in Figur 1 gezeigten Beispiel liegen die Abstützpositionen für das Werkstück 16 in einer gemeinsamen Ebene. Dies ist jedoch nicht zwingend. Die Abstützpositionen können in unterschiedlichen Höhen liegen, und je nach Form der Werkstücke können die Kolben/Zylindereinheiten 24 auch mehr oder weniger stark geneigt sein, so daß die Stempel auch bei gekrümmten Blechen im wesentlichen rechtwinklig zur Blechoberfläche orientiert sind. In diesen Fällen ist es besonders vorteilhaft, daß sich die hydraulischen Drücke für einzelne Kolben/Zylindereinheiten oder Gruppen solcher Einheiten unterschiedlich einstellen lassen und daß sich die Stempel auch völlig drucklos schalten lassen und dann unter der Wirkung der Druckfedern 62 selbsttätig die zurückgezogene Position einnehmen. Dadurch läßt sich verhindern, daß die Werkstücke beim Auflegen auf das Spannbett 10 in unerwünschter Weise verschoben oder verformt werden.

Ein Schweißvorgang mit der oben beschriebenen Spannvorrichtung kann beispielsweise wie folgt ablaufen.

Das Spannbett 10 befindet sich beispielsweise auf einem Drehteller, mit dem es von einer Aufgabeposition für die Werkstücke zu einer Schweißstation transportiert werden kann, in der das Widerlager 12 stationär angeordnet ist. In der Aufgabestation werden bei drucklosen Kolben/Zylindereinheiten 24 die Werkstücke 14, 16 auf die Stempel 26 aufgelegt und mit Hilfe der Zentrierstifte 20 positioniert. Das Spannbett fährt dann zur Schweißstation und wird angehoben, so daß das obere Werkstück 14 gegen die Druckstifte 28 am Widerlager 12 gedrückt wird.

Mit Hilfe der Verriegelungseinrichtung 36 werden gemäß der Erfindung das Spannbett und das Widerlager dann formschlüssig miteinander verriegelt. Da die Stempel 26 in diesem Zustand noch nicht druckbeaufschlagt sind, braucht auch bei einer sehr großen Anzahl von Stempeln kein hoher Wiederstand überwunden zu werden, wenn die Klauen 38 der Verriegelungseinrichtung auf die zugehörigen Stifte 40 aufgleiten. Dies trägt erheblich zur Verschleißminderung bei. Erst wenn Ober- und Unterwerkzeug formschlüssig verriegelt sind, wird die Druckzufuhr eingeschaltet, so daß das untere Werkstück 16 mit Hilfe der Stempel 26 fest und mit gleichmäßiger Kraft gegen das obere Werkstück 14 gedrückt wird, das sich seinerseits an den Druckstiften 28 abstützt. Innerhalb einer Gruppe von Kolben/Zylindereinheiten 24, die an dasselbe System von Fluidleitungen 44 angeschlossen sind, ergeben sich dabei auch im Fall von Dickentoleranzen der Bleche oder sonstigen Maßabweichungen stets gleiche Anpreßkräfte, da sich der Druck gleichmäßig im Hydrauliksystem verteilt, so daß sich die Stempel selbsttätig an die tatsächliche Werkstückkontur anpassen.

Nach dem Abschluß der Schweißarbeiten werden - vorzugsweise vor dem Öffnen der Verriegelungseinrichtung 36 - die Kolben/Zylindereinheiten wieder drucklos geschaltet, so daß die miteinander verschweißten Werkstücke nicht unkontrolliert aus dem Unterwerkzeug ausgeworfen werden. Das Spannbett 10 wird dann zu einer Abnahmestation weitertransportiert, wo die verschweißten Werkstücke abgenommen werden. Dieser Vorgang kann wahlweise dadurch unterstützt werden, daß die Stempel 26 vorübergehend wieder ausgefahren werden.

Die beschriebene Spannvorrichtung kann im Rahmen der Erfindung in vielfältiger Weise abgewandelt werden. Beispielsweise ist es möglich, das Spannbett 10 stationär zu halten und das Widerlager 12 relativ zum Spannbett zu bewegen. Gegebenenfalls können auch die Kolben/Zylindereinheiten 24 am Oberwerkzeug angeordnet sein, während das Widerlager das Unterwerkzeug bildet. Es ist auch denkbar, daß die Durchbrüche für die Laserstrahlen 34 im Spannbett 10 ausgebildet sind. Die Ausbildung dieser Durchbrüche im starren Widerlager 12 hat jedoch den Vorteil, daß hier mehr Platz für die Druchbrüche zur Verfügung steht, so daß die Einspannpunkte näher an der Schweißnaht angeordnet werden können. Außerdem kann das Widerlager 12 mit einer Begasungseinrichtung ausgerüstet sein, so daß der Schweißvorgang erforderlichenfalls unter Begasung mit Druckluft oder technischen Gasen erfolgen kann.

Ebenso kann anstelle der in Figur 2 gezeigten Verriegelungseinrichtung 36 auch irgendein anderer bekannter Verriegelungsmechanismus eingesetzt werden. Während eine Verriegelungseinrichtung bei einer von Hand zu bedienenden Anlage sinnvoll ist, um eine formschlüssige und sichere Verriegelung von Spannbett 10 und Widerlager 12 zur erreichen, kann bei einer automatischen Anlage beispielsweise bereits eine Positionierungseinheit des Spannbettes 10 die Einhaltung der Relativposition von Spannbett 10 und Widerlager 12 gewährleisten.

## Patentansprüche

1. Spannvorrichtung für Remote-Laserschweißanlagen, mit einem Spannbett (10), das teleskopartig ausfahrbare Stempel (26) zur Abstützung zweier an den Schweißstellen übereinander liegender Werkstücke (14, 16) trägt, einem Widerlager (12) für die Werkstücke (14, 16), in dem Spannbett (10) und/oder dem Widerlager (12) ausgebildeten Durchbrüchen (32) für den Schweißlaserstrahl (34), und **dadurch gekennzeichnet, daß** an dem Widerlager Druckstiften (28) angeordnet sind, die jeweils einem der Stempel (26) gegenüberliegen die Stempel (26) und daß einzeln mit einer Hydraulikflüssigkeit druckbeaufschlagbar sind und daß zur gegenseitigen Verriegelung des Spannbettes (10) und des Widerlagers (12) eine Verriegelungseinrichtung (36) vorgesehen ist, die bei drucklosen Stempeln (26) in eine Stellung überführbar ist, in der sie das Spannbett und das Widerlager formschlüssig in einer Position verriegelt, in der bei druckbeaufschlagten Stempeln die Werkstücke durch die Stempel gegeneinandergedrückt werden.

2. Spannvorrichtung nach Anspruch 1, **dadurch gekennzeichnet, daß** jeder Stempel (26) in einem separaten Stempelgehäuse (54) einer Kolben/Zylindereinheit (24) geführt ist.

3. Spannvorrichtung nach Anspruch 2. **dadurch gekennzeichnet, daß** das Spannbett (10) einen Verteilerblock (22) aufweist, in dem Fluidleitungen (44) ausgebildet sind und in das die Stempelgehäuse (54) einzeln eingeschraubt sind.

4. Spannvorrichtung nach einem der vorstehenden Ansprüche, **dadurch gekennzeichnet, daß** die Stempel (26) elastisch in eine zurückgezogene Position vorgespannt sind.

5. Spannvorrichtung nach einem der vorstehenden Ansprüche, **dadurch gekennzeichnet, daß** die Stempel (26) mehrere Gruppen bilden und daß die Fluiddruckzufuhr gruppenweise steuerbar ist.

6. Spannvorrichtung nach einem der vorstehenden Ansprüche, **gekennzeichnet durch** mindestens ein Druckregelventil (48) zur Dosierung des Druckes für einen einzelnen Stempel (26) oder eine Gruppe mehrerer Stempel.

## Claims

1. Clamping device for remote laser welding devices, comprising a clamping bed (10) carrying stamps (26) that can be extended telescopically for supporting two workpieces (14, 16) that overlap one another at the welding points, a counter bearing (12) for the workpieces (14, 16), and apertures (32) for the welding laser beam (34), said apertures being formed in the clamping bed (10) and/or the counter bearing (12), **characterised in, that** the counter bearing is provided with pressing pins (28), each of which is arranged opposite to one of the stamps (26) which are adapted to be individually pressurised by a hydraulic fluid, and, for mutual locking of the clamping bed (10) and the counter bearing (12), there is provided a locking device (36) which is adapted to be moved, when the stamps (26) are not pressurised, into a position in which it positively locks the clamping bed and the counter bearing in a position in which the workpieces are pressed against one another by the stamps when the latter are pressurised.

2. Clamping device according to claim 1, **characterised in that** each of the stamps (26) is guided in a separate stamp casing (54) of a piston/cylinder unit (24).

3. Clamping device according to claim 2, **characterised in that** the clamping bed (10) comprises a distributor block (22) which is formed with fluid passages (44) and into which the stamp casings (54) are screwed-in individually.

4. Clamping device according to any of the preceding claims, **characterised in that** the stamps (26) are elastically biased into a retracted position.

5. Clamping device according to any of the preceding claims, **characterised in that** the stamps (26) form several groups, and **in that** the fluid pressure supply is adapted to be controlled group-wise.

6. Clamping device according to any of the preceding claims, **characterised by** at least one pressure control valve (48) for controlling the pressure for an individual stamp (26) or a group of several stamps.

## Revendications

1. Dispositif de serrage pour des installations de soudage à distance par laser, comprenant un banc de serrage (10), qui porte des vérins (26) télescopiques destinés à l'étayage de deux pièces à usiner (14, 16) situées l'une au dessus de l'autre au niveau des points de soudage, une culée (12) pour les pièces à usiner (14, 16), et des perçages (32) formés dans le banc de serrage (10) et/ou dans la culée (12) pour le rayon laser de soudage (34), **caractérisé en ce que** des goupille de pression (28), qui font respectivement face à un des vérins (26), sont agencées au niveau de la culée, et les vérins (26) peuvent être soumis individuellement à de la pression par un liquide hydraulique, et un dispositif de verrouillage (36) est prévu pour un verrouillage mutuel du banc de serrage (10) et de la culée (12), qui, dans le cas de vérins (26) sans pression, peut être transféré en une position dans laquelle il verrouille par complémentarité de forme le banc de serrage et la culée en une position dans laquelle, dans le cas de vérins soumis à une pression, les pièces à usiner sont pressées l'une contre l'autre par les vérins.

2. Dispositif de serrage selon la revendication 1, **caractérisé en ce que** chaque vérin (26) est guidé dans un boîtier indépendamment de vérin (54) d'un ensemble piston/cylindre (24).

3. Dispositif de serrage selon la revendication 2, **caractérisé en ce que** le banc de serrage (10) présente un bloc répartiteur (22) dans lequel sont formées des conduites de fluide (44) et dans lequel les boitiers de vérin (54) sont vissés individuellement.

4. Dispositif de serrage selon l'une quelconque des revendications précédentes, **caractérisé en ce que** les vérins (26) sont précontraints de manière élastique en une position rétractée.

5. Dispositif de serrage selon l'une quelconque des revendications précédentes, **caractérisé en ce que** les vérins (26) forment plusieurs groupes et l'alimentation en pression de fluide peut être contrôlée par groupes.

6. Dispositif de serrage selon l'une quelconque des revendications précédentes, **caractérisé par** au moins une soupape de réglage de pression (48) destinée au dosage de la pression pour un vérin (26) individuel ou un groupe de plusieurs vérins.
